(19) Europäisches Patentamt
European Patent Office
Office européen des brevets

(11) **EP 4 292 432 A1**

(12) **EUROPEAN PATENT APPLICATION**

(43) Date of publication:
**20.12.2023 Bulletin 2023/51**

(21) Application number: **23179152.6**

(22) Date of filing: **14.06.2023**

(51) International Patent Classification (IPC):
*A01N 25/04* (2006.01)     *A01N 25/30* (2006.01)
*A01N 27/00* (2006.01)     *A01N 37/02* (2006.01)
*A01N 43/16* (2006.01)     *A01N 59/02* (2006.01)
*A01N 65/06* (2009.01)     *A01N 65/36* (2009.01)
*A01N 65/42* (2009.01)     *A01P 3/00* (2006.01)
*A01P 13/00* (2006.01)     *E04D 9/00* (2006.01)
*B27K 9/00* (2006.01)

(52) Cooperative Patent Classification (CPC):
(C-Sets available)
A01P 3/00; A01N 25/04; A01N 25/30; A01N 27/00;
A01N 37/02; A01N 43/16; A01N 59/02;
A01N 65/06; A01N 65/36; A01N 65/42;
A01P 13/00; B27K 9/00; E04D 9/00; E04D 13/002

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.06.2022 NL 2032177**

(71) Applicant: **Statera Ecosolutions BV
3984 LR Odijk (NL)**

(72) Inventor: **VAN GARDEREN, Wim
3984 LR Odijk (NL)**

(74) Representative: **Brantsandpatents bv
Pauline Van Pottelsberghelaan 24
9051 Ghent (BE)**

(54) **COMPOSITION AND METHOD FOR THE PROTECTION OF TATCH OBJECTS**

(57)    The present invention relates to a composition for the protective treatment of thatch wherein said composition comprises limonene or one or more vegetal sources of limonene, one or more saponins, or one or more vegetal sources of saponins, cypress oil, an emulsifier, and sulfur. The invention further relates to the use of the composition for the treatment of thatch and thatch comprising objects. Further, the invention relates to a method of treating thatch and other thatched structures using the same composition. Further, the invention relates to the thatched roof, subjected to such treatment.

EP 4 292 432 A1

(52) Cooperative Patent Classification (CPC): (Cont.)

C-Sets
**A01N 25/04, A01N 25/30, A01N 27/00,
A01N 37/02, A01N 43/16, A01N 49/00,
A01N 59/02, A01N 65/06, A01N 65/36,
A01N 65/42;
A01N 25/30, A01N 37/02, A01N 43/16,
A01N 49/00, A01N 65/06, A01N 65/42;
A01N 27/00, A01N 25/30, A01N 37/02,
A01N 43/16, A01N 49/00, A01N 59/02,
A01N 65/06, A01N 65/42;
A01N 37/02, A01N 49/00;
A01N 43/16, A01N 37/02, A01N 49/00,
A01N 65/06;
A01N 59/02, A01N 25/30, A01N 37/02,
A01N 43/16, A01N 49/00, A01N 65/06,
A01N 65/42;
A01N 65/06, A01N 37/02, A01N 49/00;
A01N 65/36, A01N 25/30, A01N 37/02,
A01N 43/16, A01N 49/00, A01N 59/02,
A01N 65/06, A01N 65/42;
A01N 65/42, A01N 37/02, A01N 43/16,
A01N 49/00, A01N 65/06, A01N 65/42**

**Description**

**FIELD OF THE INVENTION**

The present invention relates to a composition for the protective treatment of thatch. The invention further relates to the use of the composition and a method of treating thatch and other thatched structures using the same composition.

**BACKGROUND**

Thatching is a very old roofing method and has been used in both tropical and temperate climates. In Europe, the methods have traditionally been passed down from generation to generation, over the past three centuries. Thatched roofs are still popular, especially, in Europe. It provides a rustic look, is ecologically friendly, and, has natural insulation properties.

The thatched roofs have a limited lifespan, though, and eventually will require a rethatching due to the natural degradation of the material over time. However, a thatched roof can last if the necessary care is given. The maintenance of the thatched roof mainly involves repair, cleaning, coating, and control of moss and algae growth.

The moss and algae can cause thatching material to deteriorate rapidly as they grow on the roof's surface to create a thin film covering the thatch and preventing it from drying properly. The roof stays moist for longer, allowing for fungi to thrive. Fungi feed on the cellulose in the thatch material, causing it to decompose. The result is a roof whose lifespan is reduced.

Algaecides are the chemicals used to kill off algae or prevent growth. The popular ones are the quats or quaternary ammonium compounds. They act by perforating the cell membranes of fungi, algae, and moss, causing the organisms to die. For that to occur, the cells must absorb adequate amounts of the chemical. Hence it is necessary that the thatch surface being sprayed with an algaecide kept moist for at least half an hour which may become a problem as algaecides are most effective when applied in warm weather that will lead to fast drying up. Quats don't stick to the roof's surfaces for long and they are easily washed with rain which means they need to be applied regularly. Also, the chemical only kills the moss or algae that's growing at the time of application, and will not prevent future growth.

Another disadvantage of Quats relates to their safety, they are not safe for fish, and ponds and other water bodies that are too close to the house would need to be covered. The chemical can also be dangerous to humans when in a mist or foam state. It's advisable to avoid inhaling it in a closed room, leading to serious complications.

EP1529613A1 describes a method comprising treating thatch with silicone-based composition to prevent algae growth. Besides the composition only tackles the algae growth, it has several other disadvantages. For example, silicone-based composition modifies the internal surface of the thatch, likely via blocking the pores in the stem wall. This will interfere with the desired insulation properties of the thatch. The subject matter's preferred method of use is to dip the thatch into the composition which is only applicable for thatch stems before their use in roofs or other structures but not for the thatched roofs or alike. The application of the subject matter also seems complicated as it requires conditions such as high temperature under specific pressure as well as a potential steam treatment following the application of the composition.

Products comprising D-limonene or citrus oil extract as the active component such as Moss Melt Concentrate, reported to control moss and algae on lawns and turf, as well as on hard surfaces and roots.

CN108994990 discloses a processing method of ratan for improving the anti-mold effect, The method described comprises steps including pretreatment, boiling, softening treatment, mould proofization processing, and microwave drying.

WO2006/041884A2 discloses the use of a composition comprising yucca saponins for controlling algae in soil or on the surfaces of water features.

CN106349908 discloses a treatment of wicker material with a composition comprising castor oil with 1.5 pts. wt. sulfur powder along with plant extracts.

It has formerly disclosed that a lime sulfur concentrate for use on plants, such as, Yates Lime Sulfur Concentrate, said to provide a protective film of sulfur which prevents the entry of fungus.

Thatch on thatched roofs may also be coated with e.g., lacquers to provide a protective layer. A disadvantage of such layer is that they may change the color of the thatch leading to a thatched roof without its natural color. Another disadvantage is that it affects the desired natural insulation properties of the thatch. A further disadvantage of such coatings is that moisture retention in the thatch layer occurs, leading to increased algae problems after several years.

The current invention addresses the need for natural solutions to protect thatched roofs and to promote the resilience and vitality of the processed thatch stem.

## SUMMARY OF THE INVENTION

The present invention and embodiments thereof serve to provide a solution to one or more of the above-mentioned disadvantages. To this end, the present invention relates to a composition according to claim 1. Said composition of claim 1 is composed of 100% vegetable and natural substances and all substances are of an organic origin, leaving zero or minimum impact on the environment. The product is safe for humans and the environment.

The composition of the invention comprises cypress oil which has naturally resinous properties that also contribute to counteracting weathering of the thatch naturally and physically. Cypress oil also helps to maintain lignin levels of the reed stem. Another ingredient of the composition is lecithin which supplements the natural oiliness of reeds. Sulfur is also present in the disclosed composition and it is important for the stability of cells, thatched roofs are exposed to some level of sulfur with the acid rains but due to the reduction in acid rain, it is important to treat the thatch with sulfur. Sulfur is biological and has a PH regulating effect. Sulfur in said compositions also makes the stem resilient to fungal and or bacterial growth. Emulsifiers present in the composition ensure good mixing, homogenizing the liquid mixture and enabling the well spreading of the compound on the top layer of the thatch when treated, allowing better protection. Optional ingredients of the composition are acetic acid and sunflower oil. Vinegar has preserving properties and also a cleaning effect whereas sunflower oil contains omega-6 and linoleic acid, preventing the digestion of the reed stem. Sunflower oil of said composition also acts as a natural emulsifier and binder of the mutual ingredients. The components of the present composition all serve the benefit of the life span of thatch and/or thatched objects.

In a second aspect of the invention, there is a provided use of a composition disclosed herein as a treatment of thatch and thatch comprising objects for the protection of said thatch and said objects, such as thatched roofs, according to claim 12. When applied to the thatched, disclosed composition gives a natural preservative effect to the thatch which slows down the wear down of the thatch and prevents moss and algae formation while it does not intertwine with the color or insulation features of the thatch.

In a third aspect, the present invention relates to a method according to claim 13. More particular, the method as described herein provides that the composition according to claims 1 to 12 can be administered to at least part of the thatch and/or thatched object preferably by spraying to obtain the protective effect. In a further aspect depicted in claim 19 where the invention relates to the thatched roof that is subjected to treatment according to the methods disclosed herein.

The present invention may be described by the following embodiments:

1. In embodiments, a composition is disclosed wherein said composition is suited to be applied on a thatch comprising object such as a thatched roof, wherein said composition comprises limonene or one or more vegetal sources of limonene, one or more saponins, or one or more vegetal sources of saponins, cypress oil, an emulsifier, and sulfur.

2. Composition according to embodiment 1, wherein said composition comprises:

- Between 0.01 and 1% v/v cypress oil;
- Between 0.01 and 1% of said vegetal source of limonene, wherein said vegetal source of limonene is preferably an orange extract;
- Between 0.01% and 1% v/v of said vegetal source of saponins, wherein said vegetal source of saponins is preferably an extract of yucca;
- Between 0.02 and 2% v/v of said emulsifier, wherein said emulsifier is preferably lecithin; and
- Between 0.005 to 0.5% sulfur and/or a source of sulfur.

3. Composition according to any of the previous embodiments, wherein said vegetal source of limonene is orange extract.

4. Composition according to any of the previous embodiments wherein said vegetal source of saponins is an extract of yucca.

5. Composition according to any of the previous claims, wherein said emulsifier is lecithin.

6. Composition according to any of the previous embodiments, wherein said composition further comprises one or more organic acids, preferably acetic acid or an aqueous solution of acetic acid wherein said aqueous solution preferably comprises 4 to 10 %v/v acetic acid.

7. Composition according to embodiment 6, wherein said organic acid is present in an amount of between 0.4 to 10 % v/v in the composition or wherein said aqueous solution of acetic acid is present at least in an amount of 10% v/v in the composition.

8. Composition according to embodiment 6, wherein the aqueous solution of acetic acid is vinegar, preferably wine vinegar wherein said wine vinegar is present in said composition in a concentration between 10 to 75% v/v.

9. Composition according to any of the previous embodiments, wherein said composition comprises omega-6 fatty acids or a vegetal source of omega-6 fatty acids.

10. Composition according to embodiment 9, wherein the vegetal source of omega-6 fatty acids is sunflower oil, present in a concentration in said composition between 0.1 to 10% v/v.

11. The composition according to any of the previous embodiments, wherein said composition is dilutable in a solvent, preferably in water, wherein the dilution factor is preferably in a range of 1 and 10.

12. Use of a composition according to any of the previous embodiments 1 to 11 for the protective treatment of thatch, such as a thatched roof.

13. A method for treating a thatch comprising object such as a thatched roof, wherein said method comprises contacting at least part of the thatch with a composition according to any of the embodiments 1 to 11.

14. The method according to embodiment 13, wherein said composition or a diluted part thereof is administered by spraying to at least part of the thatch and/or said thatch comprising object.

15. The method according to embodiments 13 or 14, wherein the diluted composition comprises at least 15% of a composition according to any of the claims 1 to 11.

16. The method according to any of the embodiments 13 to 15 , wherein said thatch comprising object is a roof.

17. The method according to any of the previous embodiments 13 to 16, wherein said treatment protects against the growth of at least one of the organisms listed; moss, algae, fungi, and/or, against the development of Mycelium.

18. The method according to any of the previous embodiments 13 to 17, wherein said treatment prevents biological degradation, digestion of the thatch and/or slows down weathering.

19. A thatch comprising object, preferably a roof, wherein said thatch is treated with a composition according to any of the embodiments 1 to 11.

## DETAILED DESCRIPTION OF THE INVENTION

### Definitions

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", "comprises" and "comprised of" as used herein are synonymous with "include", "including", "includes" or "contain", "containing", "contains" and are inclusive or open-ended terms that specify the presence of what follows e.g. component and do not exclude or preclude the presence of additional, non-recited components, features, element, members, steps, known in the art or disclosed therein.

Furthermore, the terms first, second, third, and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

The expression "% by volume", "volume percent" or "% v/v" here and throughout the description unless otherwise defined, refers to the relative volume of the respective component or solute based on the overall volume of the formulation. And defined as the formula:

$$v/v\ \% = [(volume\ of\ solute)/(volume\ of\ solution)] \times 100\%$$

Whereas the terms "one or more" or "at least one", such as one or more or at least one member(s) of a group of members, is clear *per se,* by means of further exemplification, the term encompasses *inter alia* a reference to any one of said members, or any two or more of said members, such as, *e.g.*, any $\geq 3$, $\geq 4$, $\geq 5$, $\geq 6$ or $\geq 7$ etc. of said members, and up to all said, members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures, or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention and form different embodiments, as would be understood by those in the art. For example, in the following claims, any of the claimed embodiments can be used in any combination.

**Detailed Description**

Disclosed herein are compositions that when administered to thatch stem, or thatch comprising structures such as thatched roofs, slow down the degradation of the thatch and prevents algae and moss formation while preserving the natural color and the desired insulation properties of thatch and thatched roofs.

In the first aspect, the current invention relates to a composition suited to be applied on thatch and thatch comprising objects such as a thatched roof. The thatch used herein is preferably based on the type of Phragmites Australis thatch, as is found in e.g. Poland, Hungary, Austria, Turkey, and the Netherlands. Herein, thatch (stems) also comprises reed (stems) suitable for use on thatched roofs.

In an embodiment said composition comprises limonene or one or more vegetal sources of limonene, one or more saponins, or one or more vegetal sources of saponins, an oil extracted from a coniferous tree, an emulsifier, and sulfur. Most conifers or coniferous trees have essential oil in their needles and the oil can be extracted by any extraction method known to the skilled person. Non-limiting examples of such methods comprise Steam Distillation, Hydrodistillation, Solvent Extraction, Cold Pressing and CO2 Extraction.

In embodiments, said coniferous tree is chosen from the group of pine, spruce, fir, cedar, cypress, and juniper trees. In further embodiments, said coniferous tree is chosen from the group of Balsam fir, Cypress, Cedar, Douglas fir, Juniper, Scotch pine, Silver fir and Black Spruce.

In an embodiment said composition comprises limonene or one or more vegetal sources of limonene, one or more saponins, or one or more vegetal sources of saponins, cypress oil, an emulsifier, and sulfur. The term "composition" herein means a combination of materials like the compounds, but it also means the diluted form of said compositions.

In embodiments said composition can comprise vegetal sources of limonene, wherein said vegetal source can be any fruits and vegetables that contain limonene, preferably citrus fruits and/or citrus fruit extracts such as oranges, lemons, grapefruits, pomelos, and limes and their extracts, more preferably orange and orange extract. In embodiments, limonene or one or more vegetal sources of limonene is present in the composition in concentrations ranging from 0.01% to 5%, from 0.01% to 4.5%, from 0.01% to 4%, from 0.01% to 3.5%, from 0.01% to 3%, from 0.01% to 2.5%, from 0.01% to 2%, from 0.01% to 1.5%, from 0.01% to 1% and all the ranges and subranges therein between. In other embodiments, the limonene or one or more vegetal sources of limonene is present in concentrations ranging from 0.01% to 5%, from 0.1% to 5%, from 1% to 5%, from 2% to 5%, from 3% to 5%, from 4% to 5% or from 0.1% to 4.5%, from 1% to 4%, from 2% to 4%, from 2% to 3%, and all the ranges and subranges therein between.

In further embodiments, limonene or one or more vegetal sources of limonene is present in the composition in concentrations ranging from 0.01% to 1%, from 0.01 to 0.8%, from 0.05 to 0.7%, from 0.05 to 0.5%, from 0.1 to 0.4%, from 0.15 to 0.3%, from 0.18 to 0.25 and all the ranges and subranges therein between. In some embodiments, the vegetal source of limonene is orange extract wherein said orange extract is present in a concentration ranging from 0.01% to 1%. For example, in a concentration ranging from 0.01 to 0.8%, from 0.05 to 0.7%, from 0.05 to 0.5%, from 0.1 to 0.4%, from 0.15 to 0.3%, from 0.18 to 0.25 and all the ranges and subranges therein between. Orange extract in said composition creates resilience and makes the stem unattractive to microorganisms.

In embodiments said composition can comprise saponins or vegetal sources of saponins, present in concentrations ranging from 0.01% to 5%. For example, in a concentration ranging from 0.01% to 5%, from 0.01% to 4.5%, from 0.01% to 4%, from 0.01% to 3.5%, from 0.01% to 3%, from 0.01% to 2.5%, from 0.01% to 2%, from 0.01% to 1.5%, from 0.01% to 1% and all the ranges and subranges therein between. In other embodiments, the limonene or one or more vegetal sources of limonene is present in concentrations ranging from 0.01% to 5%, from 0.1% to 5%, from 1% to 5%, from 2% to 5%, from 3% to 5%, from 4% to 5% or from 0.1% to 4.5%, from 1% to 4%, from 2% to 4%, from 2% to 3%, and all the ranges and subranges therein between.

In embodiments said composition can comprise saponins or vegetal sources of saponins, present in concentrations ranging from 0.01% to 1%. For example, in a concentration ranging from 0.01 to 0.8%, from 0.05 to 0.7%, from 0.05 to 0.5%, from 0.05 to 0.4%, from 0.08 to 0.3%, from 0.1 to 0.2, from 0.1 to 0.15 and all the ranges and subranges therein between. In embodiments, the vegetal source of saponin can be any plant and/or their extract that contains saponins, preferably yucca, soapwort plant, soapberry, horse chestnut, maples, jiaogulan, ginseng, more preferably yucca and yucca extract. In particular embodiments, In embodiments, the vegetal source of saponin is an extract of yucca. In embodiments said yucca extract is present in a concentration ranging from 0.01% to 1%. For example, in a concentration ranging from 0.01 to 0.8%, from 0.05 to 0.7%, from 0.05 to 0.5%, from 0.05 to 0.4%, from 0.08 to 0.3%, from 0.1 to 0.2, from 0.1 to 0.15 and all the ranges and subranges therein between. Yucca extract in said composition also provides optimal penetration of the composition into the top layer of the reed.

In embodiments said composition can comprise an essential oil from a coniferous tree, such as cypress oil. In embodiments said cypress oil is present in a concentration ranging from 0.01% to 5%. %. For example, in a concentration ranging from 0.01% to 5%, from 0.01% to 4.5%, from 0.01% to 4%, from 0.01% to 3.5%, from 0.01% to 3%, from 0.01% to 2.5%, from 0.01% to 2%, from 0.01% to 1.5%, from 0.01% to 1% and all the ranges and subranges therein between. In other embodiments, essential oil from a coniferous tree is present in concentrations ranging from 0.01% to 5%, from 0.1% to 5%, from 1% to 5%, from 2% to 5%, from 3% to 5%, from 4% to 5% or from 0.1% to 4.5%, from 1% to 4%, from 2% to 4%, from 2% to 3%, and all the ranges and subranges therein between. In further embodiments, the concentration of said oil from a coniferous tree can range from 0.01 to 1%, from 0.01% to 0.9%, from 0.01 to 0.8%, from 0.05 to 0.7%, from 0.05 to 0.5%, from 0.1 to 0.4%, from 0.15 to 0.3%, from 0.18 to 0.25 and all the ranges and subranges therein between.

In embodiments said composition can comprise cypress oil. Cypress oil has naturally resinous properties that also contribute to counteracting weathering of the thatch naturally and physically. Cypress oil also helps to maintain lignin levels of the reed stem.

In embodiments said cypress oil is present in a concentration ranging from 0.01% to 5%. For example, in a concentration ranging from 0.01% to 4.5%, from 0.01% to 4%, from 0.01% to 3.5%, from 0.01% to 3%, from 0.01% to 2.5%, from 0.01% to 2%, from 0.01% to 1.5%, from 0.01% to 1% and all the ranges and subranges therein between. In other embodiments, cypress oil is present in concentrations ranging from 0.01% to 5%, from 0.1% to 5%, from 1% to 5%, from 2% to 5%, from 3% to 5%, from 4% to 5% or from 0.1% to 4.5%, from 1% to 4%, from 2% to 4%, from 2% to 3%, and all the ranges and subranges therein between.

In embodiments said cypress oil is present in a concentration ranging from 0.01% to 1%. For example, in a concentration ranging from 0.01 to 0.8%, from 0.05 to 0.7%, from 0.05 to 0.5%, from 0.1 to 0.4%, from 0.15 to 0.3%, from 0.18 to 0.25 and all the ranges and subranges therein between.

According to various embodiments, the composition comprises at least one emulsifier. In further embodiments the emulsifiers can be present in concentrations ranging from 0.01% to 10%. For example, in concentrations ranging from 0.01% to 9%, from 0.01% to 8%, 0.01% to 7%, from 0.01% to 6%, 0.01% to 5%, from 0.01% to 4%, 0.01% to 3%, from 0.01% to 2%, 0.01% to 1%, from 0.01% to 0.5%, 0.01% to 0.1%, or from 0.1% to 10%, from 1% to 10%, from 2% to 10%, from 3% to 10%, from 4% to 10%, from 5% to 10%, from 6% to 10%, from 7% to 10%, from 8% to 10%, from 9% to 10%, or from 0.1% to 9%, from 1% to 8%, from 2% to 7%, from 3% to 6%, from 4% to 5%, and all ranges and subranges therein between.

In embodiments said emulsifiers can be present in concentrations ranging from 0.01% to 2%. For example, in a concentration ranging from 0.05 to 1.5%, from 0.1 to 1%, from 0.2 to 0.8%, from 0.3 to 0.6%, from 0.3 to 0.5%, from 0.35 to 0.45 and all the ranges and subranges therein between. Emulsifiers ensure good mixing, homogenizing the liquid compound mixture and spreading on the top layer of the thatch when treated with the said compound. In embodiments said emulsifiers can be lecithin present in concentrations ranging from 0.01% to 2%. For example, in a concentration ranging from 0.05 to 1.5%, from 0.1 to 1%, from 0.2 to 0.8%, from 0.3 to 0.6%, from 0.3 to 0.5%, from 0.35 to 0.45 and all the ranges and subranges therein between. Lecithin in said composition also supplements the natural oiliness of reeds.

According to various embodiments, the composition comprises sulfur and/or a source of sulfur. Sulfur is important for the stability of cells, thatched roofs are exposed to some level of sulfur with the acid rains but due to the reduction in acid rain, it is important to treat the thatch with sulfur. Sulfur is biological and has a PH regulating effect. Sulfur in said compositions also makes the stem resilient to fungal and or bacterial growth. In embodiments concentration of said sulfur can be ranging from 0.005% to 5%. For example, in a concentration ranging from 0.005% to 4.5%, from 0.005% to 4%, from 0.005% to 3.5%, from 0.005% to 3%, from 0.005% to 2.5%, from 0.005% to 2%, from 0.005% to 1.5%, from 0.005% to 1%, from 0.005% to 0.5%, and all the ranges and subranges therein between. In other embodiments, sulfur is present in concentrations ranging from 0.008% to 5%, 0.01% to 5%, 0.05% to 5%, from 0.1% to 5%, from 1% to 5%, from 2% to 5%, from 3% to 5%, from 4% to 5% or from 0.01% 4.5%, 0.1% to 4.5%, from 1% to 4%, from 2% to 4%, from 2% to 3%, and all the ranges and subranges therein between. In embodiments concentration of said sulfur can be ranging from 0.005% to 1%. For example, in a concentration ranging from 0.05 to 1 %, from 0.009 to 0.8%, from 0.01 to 0.7%, from 0.015 to 0.6%, from 0.03 to 0.4%, from 0.04 to 0.3%, from 0.05 to 0.2%, from 0.05 to 0.1, from 0.05 to 0.09, from 0.06 to 0.08, and all the ranges and subranges therein between.

In embodiments, the vegetal source of limonene is orange extract.

In embodiments, the vegetal sources of saponins is yucca extract.

In a preferred embodiment, the composition comprises between 0.01% and 5% v/v oil extracted from a pine, spruce, fir, cedar, cypress, or juniper tree, between 0.01% and 5% of orange extract, between 0.01% and 5% v/v of extract of yucca, between 0.02% and 10% v/v of said emulsifier, wherein said emulsifier is lecithin, and between 0.005% to 5% sulfur and/or a source of sulfur.

According to embodiments said composition can further comprise one or more organic acids. Preferably one of the said organic acids is acetic acid or an aqueous solution of acetic acid. In embodiments, said organic acid is present in an amount of 0.4 to 10 % v/v, preferably 0.5 to 9% v/v, 1 to 8% v/v, 1 to 7% v/v, 1 to 6% v/v, more preferably 1 to 5% v/v, even more preferably 2 to 4% v/v. According to some embodiments, the aqueous solution of acetic acid can be a dilution of acetic acid which comprises at least 4 to 10 % of acetic acid by volume. The aqueous solution can have acetic acid in v/v concentrations ranging between 4 to 10 % v/v, 4 to 9 % v/v, 4 to 8 % v/v, 4 to 7%, 4 to 6%, 4 to 5% and all the ranges and subranges therein between. According to some embodiments, the aqueous solution of acetic acid can be vinegar, preferably wine vinegar, more preferably organic vine vinegar. In embodiments, said aqueous solution of acetic acid or said vine vinegar can be present in a concentration ranging between 10 to 75% v/v, 15 to 75% v/v, 20 to 75% v/v, such as 25 to 70% v/v, 30 to 65% v/v, 35 to 60% v/v, 40 to 55% v/v, 40 to 50% v/v and all the ranges and subranges therebetween. Vine vinegar in said composition provides a cleanings effect.

In embodiments, said composition can comprise omega-6 fatty acids or a vegetal source of omega-6 fatty acids. In embodiments said omega-6 fatty acids or a vegetal source of omega-6 fatty acids present in the said composition in the concentrations ranging from 0.1 to 10% v/v e.g., from 0.2 to 9% v/v, from 0.2 to 8% v/v, from 0.2 to 7% v/v, from 0.2 to 6% v/v, from 0.2 to 5% v/v, from 0.2 to 4% v/v, from 0.2 to 3% v/v, from 0.2 to 2% v/v. from 0.2 to 1.5% v/v , and all ranges and subranges therebetween. According to some embodiments the vegetal source of said omega-6 fatty acids is preferably sunflower oil, present in a concentration ranging from 0.1 to 10% v/v e.g., from 0.2 to 9% v/v, from 0.2 to 8% v/v, from 0.2 to 7% v/v, from 0.2 to 6% v/v, from 0.2 to 5% v/v, from 0.2 to 4% v/v, from 0.2 to 3% v/v, from 0.2 to 2% v/v. from 0.2 to 1.5% v/v and all ranges and subranges therebetween. Sunflower oil contains omega-6 and linoleic acid and helps prevent digestion of the reed stem. Sunflower oil of said composition also acts as a natural emulsifier and binder of the mutual ingredients.

It is understood that total concentrations of the ingredients in the composition according to the disclosure does not exceed 100% v/v. The percentages provided for each ingredient in the composition are relative and should be understood as representative proportions rather than absolute quantities.

In embodiments, the composition is dilutable with water or another solvent alike. According to some embodiments composition of the invention becomes ready-to-use composition after a dilution. In embodiments said diluted solution should comprise at least 10% of the composition disclosed herein. In embodiments diluted solution can comprise at least 10%, at least 15%, at least 20%, at least 30%, at least 40%, at least 50%, at least 60%, at least 70%, at least 80%, at least 90%, at least % 100% of the solution. According to some embodiments, the preferred dilution ratio is one-part composition and 5 parts water, more preferably one-part composition and 4-part water, even more preferably one-part composition and 3-part water. When diluted the v/v percentage concentration of each component remain at least in the minimum range that is given in the composition. For example, cypress oil is 0.01%; vegetal source of limonene is 0.01 %; vegetal source of saponins is 0.01%; lecithin is 0.02%, sulfur and/or a source of sulfur is 0.005% v/v. In some specific embodiments said ready-to-use composition comprises, 0.05% v/v cypress oil; 0.05% of said vegetal source of limonene; 0,033% v/v of said vegetal source of saponins; 0.1% v/v of said emulsifier; and 0,017% v/v sulfur and/or a source of sulfur; and optionally said ready-to-use composition comprises an aqueous source of acetic acid and an optional source of omega-6 fatty acids.

In a second aspect of the invention, there is a provided use of a composition disclosed herein as a treatment of thatch and thatch comprising objects for the protection of said thatch and said objects, such as thatched roofs. In embodiments, the use of the composition of the invention as treatment of the thatch and thatch comprising object can at least to some extent prevents degradation of the thatch, and prevents physical moss and algae formation. The composition gives a natural preservative effect to the thatch which slows down the wear down of the thatch while it does not intertwine with the desired features (e.g., the natural color of the thatch and insulation properties) of the thatch and thatched object such as a roof.

In another aspect, according to the present invention, there is provided a method for treating a thatch comprising object such as a thatched roof. According to embodiments said method comprises contacting at least part of the thatch and/or thatch comprising object with the composition or diluted form of the composition disclosed herein. Preferably, contacting the surface of the thatch and thatch contacting object wherein said thatch comprising object is preferably a roof.

In embodiments, the composition is administered to at least part of the thatch and/or thatch comprising object by spraying, preferably, said thatch comprising object is a roof, and composition is administered to the said roof so that roof becomes moist. In embodiments, optimal weather conditions for the method disclosed herein is dry weather with temperatures 8 to 30 degrees Celsius wherein at least six hours of drying time is allowed after the application of the composition to the thatched roof. The optimal weather temperature can range between 8 to 30 degrees Celsius, 9 to 28, 10 to 25 degrees Celsius, and any ranges therebetween.

In embodiments, for the best effect, preferably the composition is applied to the thatched roof shortly after the thatching or maintenance by sweeping the thatched roof wherein shortly can mean, in one hour, in one day, in one week, in one month, or three months after thatching or maintenance of the roof. In embodiments, optionally the composition is administered to the thatched roofs periodically, preferably bi-annually, more preferably annually.

In embodiments, the method of this disclosure wherein treatment of thatch with said composition provides protection against the growth of at least one of the organisms listed; moss, algae, fungi, and/or, against the development of Mycelium. In further embodiments, treatment of thatch with said composition prevents degradation and digestion of the thatch and, slows down weathering.

In another aspect, present disclosure related to the thatch comprising objects, wherein said thatch is treated with a composition of the present invention. In embodiments, the thatch used in the thatch comprising object can be treated with the composition of the said invention partially or fully. Said thatch treated with the composition of the invention can be used for the assembly of said object immediately after the treatment or at a later time point following the treatment where said thatch can be still moist from the treatment or fully dry. In embodiments thatch comprising objects can be any object or structure that is build using thatch such as thatched roof, thatch umbrella, thatch canopy, thatch hut, thatch fences, thatch shelters, thatch hat or alike.

The present invention will be now described in more detail, referring to examples that are not limitative.

## EXAMPLES

Example 1: Compositions according to the current invention

Table 1 shows compositions according to the current invention, suited to be used in the treatment of thatch objects.

| Composition 1 | Limonene, saponins, Cypress oil, emulsifier, sulfur mixed in water |
|---|---|
| Composition 2 | Vegetal sources of limonene, one or more vegetal sources of saponins, cypress oil, an emulsifier, and sulfur mixed in water |
| Composition 3 | Vegetal sources of limonene, one or more vegetal sources of saponins, cypress oil, an emulsifier, and sulfur acetic acid and omega-6 fatty acid mixed in water |
| Composition 4 | Orange extract, Yucca extract, cypress oil, lecithin, sulfur mixed in water |
| Composition 5 | Orange extract, Yucca extract, cypress oil, lecithin, sulfur, vinegar mixed in water |
| Composition 6 | Limonene (0.02%), saponins(0.07%), Cypress oil (0.1%), emulsifier(0.2%), sulfur (0.35%), wine vinegar(24%), sunflower oil (0.46%) and water (74,5%) |
| Composition 7 | Orange extract(1%), Yucca extract(1%), cypress oil (1%), lecithin (2%), sulfur (0.5%), and water (94.5%) |
| Composition 8 | Orange extract(1%), Yucca extract(1%), cypress oil (1%), lecithin (2%), sulfur (0.5%), vinegar (40%), sunflower oil (1%) and water (53.5%) |

Example 2: Exemplary preparation process of a composition according to the current invention

Below the production of the invented composition is further described by a non-limiting example which further illustrates the invention, and is not intended to, nor should it be interpreted to, limit the scope of the invention. The stepwise production protocol that is disclosed herein is exemplary and it will be clear to a skilled person that other routes can be explored to obtain the compositions if needed.

Production of composition takes place in 1000 liter IBCs and the compounds provided in Table 2 are added to the composition according to the stepwise protocol depicted below.

Table 2: compounds of an exemplary composition

| Raw Material Name | volume (liters) | % |
|---|---|---|
| Wine vinegar | 360 | 48,00% |

(continued)

| Raw Material Name | volume (liters) | % |
|---|---|---|
| Cypress oil | 1,5 | 0,20% |
| Lecithin | 3 | 0,40% |
| Yucca extract | 1 | 0,13% |
| Orange extract | 1,5 | 0,20% |
| Sunflower oil | 7,5 | 1,00% |
| Sulfur | 0,5 | 0,07% |
| Water | 375 | 50,00% |
| **Total medium** | **750** | **100,00%** |

360 liters of vinegar and 375 liters of water are added to the IBC container and stirred continuously. While stirring, cypress oil, orange extract and sulfur are added to the mixture. Lecithin and sunflower oil are mixed on the side and then added to the mixture. Continuous stirring can be done by using a concrete mixer.

Once all the materials are added, a pump with a pipe structure can be submerged in the bottom of the vessel and run for at least 40 hours. The vessel cap should be closed well during the mixing process.

After these 40 hours, the mixture is ready for filling in the desired packaging.

If the filling is delayed, mixture should be stirred once per week, and before filling mixture should be mixed with the submersible pump again about half an hour in advance.

The concentration of the compounds in the composition may be different than what is given in table 1. For example, another non-liming exemplary concentration of the compounds of the composition is listed in Table 3.

Table 3 compounds of an exemplary composition

| Raw Material Name | volume (liters) | % |
|---|---|---|
| Wine vinegar | 90 | 12,00% |
| Cypress oil | 0.375 | 0,05% |
| Lecithin | 0.75 | 0,10% |
| Yucca extract | 0.25 | 0,0325% |
| Orange extract | 0.375 | 0,05% |
| Sunflower oil | 1.875 | 0.25% |
| Sulfur | 0.125 | 0,0175% |
| Water | 656.25 | 87.5% |
| **Total medium** | **750** | **100,00%** |

Example 3: Administration of the composition to a thatched roof

The below method is recommended for the best outcome and protection of the thatched roof treated with the disclosed composition.

The composition is administered to the roof by spraying. For a better result, the roof to be treated should be dry before the application. The product should become in contact with the whole surface of the roof so that the surface of the roof becomes well moist. It is recommended to administer the composition to the thatched roof in dry weather where a minimum six hours of drying time is allowed. preferably the composition should be administered to the roof at temperatures between 8 to 30 degrees Celsius.

Recommended Dosage:

For a better outcome composition can be diluted with water in the ratio of 1 liter of medium(composition) to 3 liters of water to obtain the ready-to-use solution. 4 liters of the ready-to-use solution is suitable to treat 5 to 10 $m^2$ of

the roof. For long-term benefit, the application should be repeated annually.

If there is a natural stone, windows, and or woodwork that can be hit during the treatment, these places should be wet in advance and rinsed again with tap water after application to prevent staining. Copper rain drains should be covered well before for the application as copper is sensitive to acids.

Example 4: The testing of the protective effect of the composition on thatch

Small pilot thatched roofs were made by bundles of reed belonging to the species Palustri tecta.

An other pilot group of roofs were made by using bundles of reed belonging to the species Phragmites australis.

Following the thatching, roofs were treated with the composition of the invention which was prepared according to example 2 and with the recommendations depicted in example 3. Results were compared with the roofs that were not treated.

The immediate results indicated that the treatment did not change the original color of the reed and the treated reed and untreated reed show no significant color difference after proper drying time is allowed.

Further, after 6 months following the treatment, untreated thatched roofs change color, and algae growth was observed where the treated thatched roofs according to the invention showed no or minimum fungi, moss, and algae formation.

Example 5: The protective effect of the composition on a treated thatched roof

A composition was prepared according to example 2 and administered according to example 3 to multiple thatched roofs either immediately following the thatching or maintenance by sweeping the thatched roofs. After 6 months of application, roofs were evaluated for moss, algae and, fungi growth, color, and overall wear down/ status of the roof.

Treated roofs showed minimal to no moss, algae, and fungi growth, minimal color change, and needed less maintenance than average thatched roofs.

The present invention is in no way limited to the embodiments described in the examples and/or shown in the figures. On the contrary, methods according to the present invention may be realized in many different ways without departing from the scope of the invention.

**Claims**

1. A composition suited to be applied on a thatch comprising object, such as a thatched roof, wherein said composition comprises:

   - limonene or one or more vegetal sources of limonene, wherein the vegetal source of limonene is orange extract,
   - one or more saponins or one or more vegetal sources of saponins, wherein the vegetal source of saponins is yucca extract,
   - an oil extracted from a coniferous tree, wherein said coniferous tree is chosen from the group of pine, spruce, fir, cedar, cypress, and juniper trees.
   - an emulsifier, and
   - sulfur.

2. The composition according to claim 1, wherein said composition comprises:

   - Between 0.01% and 5% v/v oil extracted from a pine, spruce, fir, cedar, cypress, or juniper tree;
   - Between 0.01% and 5% of orange extract;
   - Between 0.01% and 5% v/v of extract of yucca;
   - Between 0.02% and 10% v/v of said emulsifier, wherein said emulsifier is lecithin; and
   - Between 0.005% to 5% sulfur and/or a source of sulfur.

3. The composition according to claim 1 or 2, wherein said composition comprises:

   - Between 0.01 and 1% v/v cypress oil;
   - Between 0.01 and 1% of said vegetal source of limonene, wherein said vegetal source of limonene is preferably an orange extract;
   - Between 0.01% and 1% v/v of said vegetal source of saponins, wherein said vegetal source of saponins is preferably an extract of yucca;

- Between 0.02% and 2% v/v of said emulsifier, wherein said emulsifier is preferably lecithin; and
- Between 0.005% to 0.5% sulfur and/or a source of sulfur.

4. The composition according to any of the previous claims, wherein said emulsifier is lecithin.

5. The composition according to any of the previous claims, wherein said composition further comprises one or more organic acids, preferably acetic acid or an aqueous solution of acetic acid wherein said aqueous solution comprises 4 to 10 % acetic acid by volume.

6. The composition according to claim 5, wherein said organic acid is present in an amount of between 0.4 to 10 % v/v or wherein said aqueous solution of acetic acid is present at least in an amount of 10% v/v.

7. The composition according to claim 5 or 6, wherein the aqueous solution of acetic acid is vinegar, preferably wine vinegar wherein said wine vinegar is present in said composition in a concentration between 10 to 75% v/v wherein the total v/v percentage of the components said composition does not exceed 100% v/v.

8. The composition according to any of the previous claims, wherein said composition comprises omega-6 fatty acids or a vegetal source of omega-6 fatty acids.

9. The composition according to claim 8, wherein the vegetal source of omega-6 fatty acids is sunflower oil, present in a concentration in said composition between 0.1 to 10% v/v.

10. The composition according to any of the previous claims is dilutable in a solvent, preferably in water, wherein the dilution ratio is preferably in a range of 1 to 10 fold.

11. Use of a composition according to any of the previous claims 1 to 10 for the protective treatment of thatch, such as a thatched roof.

12. A method for treating a thatch comprising object such as a thatched roof, wherein said method comprises contacting at least part of the thatch with a composition according to any of the claims 1 to 10.

13. The method according to claim 12, wherein said composition or a diluted part thereof is administered by spraying to at least part of the thatch and/or said thatch comprising object.

14. The method according to claim 12 or 13, wherein the diluted composition comprises at least 15% of a composition according to any of the claims 1 to 10.

15. The method according to any of the previous claims 12 to 14, wherein said treatment protects against the growth of at least one of the organisms listed; moss, algae, fungi, and/or, against the development of Mycelium and/or wherein said treatment prevents biological degradation, digestion of the thatch and/or slows down weathering.

Europäisches
Patentamt

European
Patent Office

Office européen
des brevets

## EUROPEAN SEARCH REPORT

**Application Number**

EP 23 17 9152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "Moss Melt Concentrate – Hard Surface and Roof Tech Sheet", , 16 December 2014 (2014-12-16), pages 1-2, XP093012818, Oregon, US Retrieved from the Internet: URL:http://mossmelt.com/wp-content/uploads/2017/02/Roof-Tech-Sheet-W-12-2014.pdf [retrieved on 2023-01-10] * page 1 * ----- | 1-15 | INV. A01N25/04 A01N25/30 A01N27/00 A01N37/02 A01N43/16 A01N59/02 A01N65/06 A01N65/36 A01N65/42 A01P3/00 A01P13/00 E04D9/00 B27K9/00 |
| Y | CN 108 994 990 A (DEBAO GUANGXIN TRADING CO LTD) 14 December 2018 (2018-12-14) * abstract * * paragraph [0013] * * paragraph [0016] * * examples * * claims * ----- | 1-15 | |
| Y | WO 2006/041884 A2 (MCFADDEN DAVID [US]) 20 April 2006 (2006-04-20) * claims * * examples * ----- | 1-15 | TECHNICAL FIELDS SEARCHED (IPC)  A01N A01P E04D B27K |
| Y | CN 106 349 908 A (ANHUI FUNAN COUNTY VANGUARD AND CRAFTS CO LTD) 25 January 2017 (2017-01-25) * abstract * * claims * ----- | 1-15 | |

-/--

The present search report has been drawn up for all claims

| Place of search | Date of completion of the search | Examiner |
|---|---|---|
| Munich | 12 October 2023 | Galley, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

**EP 23 17 9152**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "Yates Lime Sulfur Concentrate (The Wayback Machine Archive)", , 21 May 2022 (2022-05-21), pages 1-2, XP093013073, NZ Retrieved from the Internet: URL:https://web.archive.org/web/2022052106 0506/https://www.yates.co.nz/products/dise ase-control/yates-lime-sulfur-concentrate/ [retrieved on 2023-01-11] * page 1 * ----- | 1-15 | |
| Y | ELLER III FRED J.: "Effects of conifer essential oils on protection of wood from termites and decay fungi.", 2020 AOCS ANNUAL MEETING & EXPO INDUSTRIAL OIL PRODUCTS, 1 January 2021 (2021-01-01), pages 1-17, XP093090937, Retrieved from the Internet: URL:https://annualmeeting.aocs.org/> * abstract * ----- | 1-15 | |
| A | WO 97/23327 A1 (BAUER WULF [DE]; THOENE GERD [DE]) 3 July 1997 (1997-07-03) * the whole document * ----- | 1-15 | **TECHNICAL FIELDS SEARCHED (IPC)** |
| A,D | EP 1 529 613 A1 (THATCHTEC B V [NL]) 11 May 2005 (2005-05-11) * the whole document * ----- | 1-15 | |

The present search report has been drawn up for all claims

| Place of search | Date of completion of the search | Examiner |
|---|---|---|
| Munich | 12 October 2023 | Galley, Carl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 9152

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2023

| Patent document cited in search report | | Publication date | Patent family member(s) | | Publication date |
|---|---|---|---|---|---|
| CN 108994990 | A | 14-12-2018 | NONE | | |
| WO 2006041884 | A2 | 20-04-2006 | US | 2006073973 A1 | 06-04-2006 |
| | | | US | 2006121126 A1 | 08-06-2006 |
| | | | US | 2010092575 A1 | 15-04-2010 |
| | | | WO | 2006041884 A2 | 20-04-2006 |
| CN 106349908 | A | 25-01-2017 | NONE | | |
| WO 9723327 | A1 | 03-07-1997 | AU | 1869997 A | 17-07-1997 |
| | | | DE | 19649482 A1 | 26-06-1997 |
| | | | WO | 9723327 A1 | 03-07-1997 |
| EP 1529613 | A1 | 11-05-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1529613 A1
- CN 108994990
- WO 2006041884 A2
- CN 106349908